# EUROPÄISCHE PATENTSCHRIFT

(11) **EP 4 242 090 B1**
(45) Veröffentlichungstag und Bekanntmachung des Hinweises auf die Patenterteilung: **30.09.2026**
(21) Anmeldenummer: 23183426.8
(22) Anmeldetag: 05.04.2019
(51) Int. Cl.: B62D 59/04

(54) **HILFSANTRIEB FÜR EIN FAHRZEUG, INSBESONDERE FÜR EINEN ANHÄNGER, SOWIE ANHÄNGER**
AUXILIARY DRIVE FOR A VEHICLE, IN PARTICULAR FOR A TRAILER, AND TRAILER
ENTRAÎNEMENT AUXILIAIRE POUR UN VÉHICULE, EN PARTICULIER POUR UNE REMORQUE, AINSI QUE REMORQUE

(30) Priorität: 10.04.2018 DE 202018101924 U
(43) Veröffentlichungstag der Anmeldung: 13.09.2023
(62) Dokumentnummer(n) der früheren Anmeldung(en) nach Art. 76 EPÜ: 19167634.5 / 3 552 932
(73) Patentinhaber: Reich GmbH Regel- und Sicherheitstechnik, 35713 Eschenburg-Wissenbach (DE)
(72) Erfinder: Bender, Steffen, 35713 Eschenburg (DE); Welle, Rudolf, 51503 Rösrath (DE); Beijersbergen van Henegouwen, Cornelis Martin, 2274 Voorburg (NL); Kunz, Thomas, 35713 Eschenburg (DE); Schaurer, Oliver, 85445 Oberding (DE)
(74) Vertreter: Hofstetter, Schurack & Partner

(56) Entgegenhaltungen:
- EP-A1- 2 208 661
- EP-A2- 2 952 421
- CN-U- 205 365 801
- DE-U1- 202014 100 738
- FR-A1- 2 965 539
- GB-A- 2 447 069
- GB-A- 2 457 725

## Beschreibung

Die vorliegende Erfindung betrifft einen Hilfsantrieb für ein Fahrzeug, insbesondere für einen Anhänger wie beispielsweise einen Wohnwagen, einen Bootsanhänger, einen Verkaufswagen, einen Transportanhänger oder einen Autotransportanhänger, gemäß Anspruch 1. Ferner betrifft die Erfindung einen Anhänger mit einem solchen Hilfsantrieb.

Derartige, auch als Rangierantriebe oder Rangierhilfen bezeichnete Hilfsantriebe für Fahrzeuge, insbesondere für Anhänger wie beispielsweise Wohnwagen, Bootsanhänger, Verkaufswagen, Transportanhänger oder Autotransportanhänger, sind aus dem allgemeinen Stand der Technik bereits hinlänglich bekannt. Der Hilfsantrieb weist einen beispielsweise als Elektromotor ausgebildeten Motor und ein von dem Motor antreibbares Getriebe auf. Dies bedeutet, dass von dem Motor bereitgestellte Drehmomente in das Getriebe eingeleitet werden können. Des Weiteren weist der Hilfsantrieb ein Gehäuse auf, in welchem zumindest das Getriebe aufgenommen ist. Außerdem umfasst der Hilfsantrieb wenigstens eine über das Getriebe von dem Motor antreibbare und dadurch relativ zu dem Gehäuse drehbare Antriebsrolle, welche auch als Antriebswalze bezeichnet wird. Die Antriebsrolle kann in Stützanlage, das heißt in Kontakt mit wenigstens einem Rad des Fahrzeugs bewegt werden, sodass dann, wenn die Antriebsrolle über das Getriebe von dem Motor angetrieben wird, während sich die Antriebsrolle in Stützanlage mit dem Rad befindet, das Rad über die Antriebsrolle und über das Getriebe von dem Motor angetrieben werden kann beziehungsweise angetrieben wird. Hierdurch kann das beispielsweise motorlose Fahrzeug auf besonders einfache Weise bewegt und insbesondere rangiert werden.

Aufgabe der vorliegenden Erfindung ist es, einen Hilfsantrieb und einen Anhänger der eingangs genannten Art derart weiterzuentwickeln, dass eine besonders vorteilhafte Anordnung des Hilfsantriebs an dem Fahrzeug realisiert werden kann.

Diese Aufgabe wird erfindungsgemäß durch einen Hilfsantrieb mit den Merkmalen des Anspruchs 1 sowie durch einen Anhänger mit den Merkmalen des Anspruchs 11 gelöst. Vorteilhafte Ausgestaltungen mit zweckmäßigen Weiterbildungen der Erfindung sind in den übrigen Ansprüchen angegeben.

Der erfindungsgemäße, auch als Rangierantrieb oder Rangierhilfe bezeichnete Hilfsantrieb für ein Fahrzeug, insbesondere für einen Anhänger wie beispielsweise einen Wohnwagen, einen Bootsanhänger, einen Verkaufswagen, einen Transportanhänger, einen Autotransportanhänger oder einen Caravan weist einen Motor auf, welcher vorzugsweise als Elektromotor ausgebildet ist. Der beispielsweise als Elektromotor ausgebildete Motor weist beispielsweise einen Stator und einen Rotor auf, welcher von dem Stator antreibbar und dadurch um eine Motorachse relativ zu dem Stator drehbar ist. Außerdem weist der Hilfsantrieb ein Getriebe auf, welches von dem Motor antreibbar ist. Dies bedeutet, dass von dem Motor, insbesondere über den Rotor, bereitstellbare beziehungsweise bereitgestellte Drehmomente in das Getriebe einleitbar sind beziehungsweise eingeleitet werden, wodurch das Getriebe angetrieben wird. Des Weiteren umfasst der Hilfsantrieb ein Gehäuse, in welchem zumindest das Getriebe zumindest teilweise, insbesondere zumindest überwiegend oder vollständig, aufgenommen ist. Der Hilfsantrieb weist ferner wenigstens eine auch als Antriebswalze bezeichnete Antriebsrolle auf, welche über das Getriebe von dem Motor, insbesondere von dem Rotor, antreibbar und dadurch relativ zu dem Gehäuse drehbar ist. Insbesondere ist die Antriebsrolle über das Getriebe von dem Motor antreibbar und dadurch um eine Drehachse relativ zu dem Gehäuse drehbar. Die Drehachse der Antriebsrolle fällt mit deren axialer Richtung zusammen. Insbesondere ist die Antriebsrolle mit dem Getriebe sowie beispielsweise über das Getriebe mit dem Motor, insbesondere mit dem Rotor, insbesondere permanent, gekoppelt. Das jeweilige, von dem Motor, insbesondere über den Rotor, bereitgestellte Drehmoment kann in das Getriebe eingeleitet und über das Getriebe auf die Antriebsrolle übertragen werden, wodurch die Antriebsrolle angetrieben und dadurch um ihre Drehachse relativ zu dem Gehäuse gedreht werden kann. Insbesondere ist das Getriebe beispielsweise dazu ausgebildet, das von dem Motor bereitgestellte Drehmoment in ein demgegenüber unterschiedliches Ausgangsmoment umzuwandeln, mittels welchem die Antriebsrolle antreibbar und dadurch um die Drehachse relativ zu dem Gehäuse drehbar ist. Hierdurch können beispielsweise der Bauraumbedarf, die Kosten und das Gewicht des Motors gering gehalten werden.

Die Antriebsrolle ist in radialer Richtung der Antriebsrolle in Stützanlage und somit in Kontakt mit wenigstens einem Rad des Fahrzeugs, insbesondere mit einem Reifen des Rads des Fahrzeugs, bewegbar, sodass durch Antreiben der Antriebsrolle das Rad über die Antriebsrolle und über das Getriebe von dem Motor angetrieben werden kann. Mit anderen Worten, wird die Antriebsrolle über das Getriebe von dem Motor angetrieben und dadurch um die Drehachse relativ zu dem Gehäuse gedreht, während sich die Antriebsrolle in Stützanlage und somit in Kontakt mit dem Rad befindet, so wird das Rad angetrieben und dadurch beispielsweise relativ zu einem Aufbau des Fahrzeugs gedreht. Hierdurch kann das Fahrzeug besonders einfach und präzise mittels des Motors und somit motorisch bewegt und insbesondere rangiert und parkiert werden, sodass das beispielsweise motorlose Fahrzeug nicht von einer Person manuell beziehungsweise mittels Muskelkraft rangiert werden muss. Mit anderen Worten ist das Fahrzeug vorzugsweise motorlos beziehungsweise antriebslos ausgebildet, sodass das Fahrzeug nicht selbständig beziehungsweise nicht mit eigener Kraft fahren kann. Der Hilfsantrieb ist dabei eine bezüglich des Fahrzeugs externe, zusätzlich zu dem Fahrzeug vorgesehene Komponente, die, insbesondere reversibel lösbar, an dem Fahrzeug befestigt werden kann. Unter dem Merkmal, dass der Hilfsantrieb vorzugsweise eine bezüglich des Fahrzeugs externe, zusätzlich zu dem Fahrzeug vorgesehene Komponente ist, ist insbesondere zu verstehen, dass der Hilfsantrieb keine Komponente und somit kein Bestandteil des Fahrzeugs ist.

Um nun den Hilfsantrieb besonders vorteilhaft an dem Fahrzeug anordnen und dabei besonders vorteilhaft und flexibel relativ zu dem Fahrzeug positionieren zu können, ist es erfindungsgemäß vorgesehen, dass zumindest ein Teil einer den maximalen Außendurchmesser der Antriebsrolle bildenden außenumfangsseitigen Mantelfläche der Antriebsrolle das Gehäuse in radialer Richtung der Antriebsrolle um wenigstens 10 Millimeter, das heißt um wenigstens einen Zentimeter überragt. Dies bedeutet, dass die Antriebsrolle die außenumfangsseitige Mantelfläche aufweist, welche auf die beschriebene Weise in radialer Richtung der Antriebsrolle in Stützanlage und somit in Kontakt mit dem Rad bewegt werden kann. Mit anderen Worten, befindet sich die Antriebsrolle entlang ihrer radialen Richtung in Stützanlage mit dem Rad, so befindet sich die Antriebsrolle über ihre außenumfangsseitige Mantelfläche in Stützanlage mit dem Rad, sodass die außenumfangsseitige Mantelfläche der Antriebsrolle das Rad berührt. Da nun das Gehäuse nicht in radialer Richtung der Antriebsrolle zumindest über den genannten Teil der außenumfangsseitigen Mantelfläche herausragt, können der Hilfsantrieb und somit die Antriebsrolle in axialer Richtung der Antriebswolle besonders vorteilhaft und insbesondere flexibel relativ zu dem Rad und somit relativ zu dem Fahrzeug angeordnet und ausgerichtet werden.

Es wurde gefunden, dass dann und erst dann, wenn zumindest der Teil der den maximalen Außendurchmesser der Antriebsrolle bildenden außenumfangsseitigen Mantelfläche der Antriebsrolle das Gehäuse in radialer Richtung der Antriebsrolle um wenigstens 10 Millimeter überragt, eine besonders vorteilhafte und zumindest nahezu freie Positionierung der Antriebsrolle beziehungsweise des Hilfsantriebs insgesamt in axialer Richtung der Antriebsrolle relativ zu dem Rad realisiert werden kann. Abstände von weniger als 10 Millimeter, und seien sie auch nur geringfügig geringer, erlauben eine solch vorteilhafte Positionierung nicht. Dies liegt insbesondere daran, dass der Reifen elastisch verformt wird, wenn die Antriebsrolle in Stützanlage mit dem Reifen bewegt wird, sodass die Antriebsrolle ein Stück in den Reifen eintaucht. Erst ein Mindestabstand von 10 Millimetern kann sicherstellen, dass der Hilfsantrieb in axialer Richtung der Antriebsrolle bedarfsgerecht positioniert werden kann. Im Rahmen der Erfindung ist es somit vorzugsweise vorgesehen, dass 10 Millimeter der geringste Überhang oder Abstand zwischen zumindest dem Teil und dem Gehäuse ist. Somit ist vorzugsweise der Abstand beziehungsweise der Überhang zwischen zumindest dem Teil und dem Gehäuse nicht geringer als 10 Millimeter, wobei sich vorzugsweise der Teil über die gesamte axiale Erstreckung der Antriebsrolle erstreckt.

Das Gehäuse ist dabei vorzugsweise das am weitesten vorstehende Gehäuse beziehungsweise das äußerste Gehäuse des Hilfsantriebs. Mit anderen Worten, der Hilfsantrieb kann beispielsweise mehrere, ineinander angeordnete Gehäuse aufweisen, in welchen das Getriebe zumindest teilweise angeordnet sein kann. Das Gehäuse, welches zumindest von dem Teil auf die beschriebene Weise überragt wird, ist dabei das äußerste Gehäuse des Hilfsantriebs, wobei das Getriebe zumindest teilweise, insbesondere zumindest überwiegend oder vollständig, in dem äußersten Gehäuse angeordnet ist. Somit bildet beispielsweise das Gehäuse zumindest einen Teilbereich einer von sich in der Umgebung des Hilfsantriebs aufhaltenden Personen optisch und haptisch wahrnehmbaren Außenhaut des Hilfsantriebs. Darunter, dass das Getriebe zumindest teilweise in dem äußersten Gehäuse angeordnet ist, ist insbesondere zu verstehen, dass das Getriebe nach außen hin, das heißt in Richtung der Umgebung des Hilfsantriebs, zumindest teilweise durch das äußerste Gehäuse überdeckt ist. Das Getriebe kann dabei auch zumindest teilweise in einem inneren Gehäuse aufgenommen sein, welches zumindest teilweise in dem äußersten Gehäuse aufgenommen sein kann.

Als besonders vorteilhaft hat es sich gezeigt, wenn zumindest der Teil der den maximalen Außendurchmesser der Antriebsrolle bildenden außenumfangsseitigen Mantelfläche der Antriebsrolle das Gehäuse in radialer Richtung der Antriebsrolle um wenigstens 15 Millimeter, insbesondere um wenigstens 20 Millimeter, überragt.

Als besonders vorteilhaft hat es sich dabei gezeigt, wenn die Antriebsrolle in eine mit der radialen Richtung der Antriebsrolle zusammenfallende Abstützrichtung translatorisch in Stützanlage mit dem Rad bewegbar ist. Um dabei den Hilfsantrieb besonders flexibel relativ zu dem Fahrzeug positionieren zu können, ist es dabei vorgesehen, dass zumindest der Teil der außenumfangsseitigen Mantelfläche das Gehäuse in die Abstützrichtung überragt. Der Erfindung liegt dabei insbesondere die folgende Erkenntnis zugrunde: Bei herkömmlichen, auch als Rangierhilfen bezeichneten Hilfsantrieben insbesondere für Caravans und sonstige gezogene Fahrzeuge erstreckt sich üblicherweise das auch als Getriebegehäuse bezeichnete Gehäuse, insbesondere im Bereich eines letzten abtreibenden Zahnrads des Getriebes, über den maximalen Außendurchmesser der das Rad antreibenden Antriebsrolle in radialer Richtung der Antriebsrolle hinaus. Hierdurch kann die Antriebsrolle in ihrer axialen Richtung nicht frei relativ zu dem Rad und dabei insbesondere auf dessen Lauffläche angeordnet werden, da sonst das Gehäuse in Kontakt mit dem Rad kommt und/oder das Gehäuse verhindert, dass die Antriebsrolle in ihrer radialen Richtung in Stützanlage mit dem Rad bewegt werden kann. Folglich erstreckt sich üblicherweise das Gehäuse zumindest einseitig, das heißt zumindest auf einer axialen Seite der Antriebsrolle über deren maximalen Außendurchmesser in radialer Richtung der Antriebsrolle hinaus. Außerdem kann sich das Gehäuse zumindest einseitig über die maximale seitliche Ausdehnung des Rads, insbesondere dessen Reifens, hinaus erstrecken. Dies kann zu Kollisionen mit weiteren Anbauteilen des Fahrzeugs wie etwa einem Stoßdämpfer, Chassis- beziehungsweise Rahmenteilen, einem Kotflügel, Radläufen und/oder einer Schürze führen. In einigen Fällen ist dadurch eine Montage des Hilfsantriebs an dem Fahrzeug überhaupt nicht möglich. Bei einer Montage des Hilfsantriebs mit nach außen weisendem Gehäuse kann dieses nach außen über das Rad beziehungsweise dessen Reifen herausragen und somit mit Objekten kollidieren.

Um dennoch eine akzeptable Anordnung eines solchen Hilfsantriebs zu ermöglichen, kommen üblicherweise Distanzelemente zum Einsatz. Durch die Verwendung von solchen Distanzelementen kann der Hilfsantrieb in Fahrzeughochrichtung tiefer nach unten verlegt werden als ohne Verwendung der Distanzelemente. Dadurch ist es möglich, den Hilfsantrieb derart an dem Fahrzeug zu positionieren, dass der Hilfsantrieb vollständig außerhalb von Kollisionsbereichen angeordnet ist. Dadurch vermindert sich jedoch die Bodenfreiheit des Fahrzeugs, und es kommt zu einem hohen Gewicht einer das Fahrzeug und den daran über die Distanzelemente montierten Hilfsantrieb umfassenden Einheit. Weiterhin könnten nicht-funktionale beziehungsweise nichtsicherheitsrelevante Bauteile des Fahrzeugs modifiziert oder entfernt werden, indem beispielsweise Schürzen von Radläufen ausgeschnitten oder beschnitten werden. Jedoch ist eine dauerhafte Modifizierung beziehungsweise Beschädigung des Fahrzeugs unerwünscht, und vielfach sind jedoch keine solchen Möglichkeiten gegeben. Ferner können einer solchen Montage einer Rangierhilfe Bauteile des Fahrzeugs entgegenstehen, welche nicht demontiert werden sollen. Hierbei kann es sich beispielsweise um Stoßdämpfer handeln.

Die zuvor genannten Nachteile und Probleme können nun vermieden werden, da dadurch, dass das Gehäuse zumindest den auf dem maximalen Außendurchmesser der Antriebsrolle angeordneten Teil vorzugsweise zumindest in die Abstützrichtung nicht überragt, die Antriebrolle in ihrer axialen Richtung zumindest nahezu beliebig relativ zu dem Rad und dabei beispielsweise auf dessen Laufläche positioniert werden kann. Mit anderen Worten ist es vorzugsweise vorgesehen, dass zumindest der Teil der den maximalen Außendurchmesser der Antriebsrolle bildenden und somit auf den maximalen Außendurchmesser der Antriebsrolle angeordneten außenumfangsseitigen Mantelfläche der Antriebsrolle das in die Abstützrichtung am weitesten vorstehende beziehungsweise in den Reifen eintauchende Element des Hilfsantriebs ist. Dadurch kann der erfindungsgemäße Hilfsantrieb zumindest in axialer Richtung der Antriebsrolle zumindest im Wesentlich frei beziehungsweise beliebig relativ zu dem Rad positioniert werden, wodurch der Hilfsantrieb unter Umgehung von Bauelementen des Fahrzeugs an diesem montiert werden kann. Dadurch können Kollisionen des Hilfsantriebs mit anderen Bauteilen vermieden werden. Insbesondere ist es möglich, ein Hinaus- beziehungsweise Herausragen des Hilfsantriebs über das Rad hinaus, insbesondere in axialer Richtung des Rads, zu vermeiden, wodurch Kollisionen vermieden werden können.

Beispielsweise ist es möglich, einen Durchmesser einer letzten Stirnradstufe des Getriebes im Verhältnis zur Antriebsrolle besonders gering zu halten beziehungsweise zu reduzieren, insbesondere durch Neuauslegung des Getriebes und vorzugsweise bei gleichzeitiger, ungefährer Beibehaltung des Gesamtübersetzungsverhältnisses des Getriebes. Die letzte Stirnradstufe ist dabei beispielsweise die in einem Drehmomentenpfad, über welchen das jeweilige, von dem Motor bereitgestellte Drehmoment über das Getriebe zu beziehungsweise auf der Antriebsrolle übertragbar ist beziehungsweise übertragen wird, letzte angeordnete Stirnradstufe des Getriebes.

Durch Reduzierung des Durchmessers der letzten Stirnradstufe kann eine reine Vergrößerung des Außendurchmessers der Antriebsrolle vermieden werden, was zu einer höheren mechanischen Belastung des Hilfsantriebs führen würde. **In** der Folge können der Bauraumbedarf und das Gewichts des Hilfsantriebs insgesamt in einem besonders geringen Rahmen gehalten werden, sodass dieser besonders bedarfsgerecht und flexibel an dem Fahrzeug positioniert werden kann. Außerdem kann dadurch, dass eine Vergrößerung des Außendurchmessers der Antriebsrolle vermieden werden kann, eine Änderung einer Walkarbeit der Antriebsrolle im Reifen verhindert werden, sodass ein unerwünschtes Fahrverhalten des Fahrzeugs sowie ein verfrühter Schlupf bei hohen zu übertragenden Drehmomenten wie beispielsweise bei einer Bordsteinüberfahrt, bei einem steilen Anstieg und bei einem hohen Gewicht des Fahrzeugs vermieden werden kann.

Eine weitere Ausführungsform zeichnet sich dadurch aus, dass der Hilfsantrieb ein an dem Fahrzeug befestigbares Basiselement aufweist, über welches der Hilfsantrieb an dem Fahrzeug befestigbar ist. Dabei ist zumindest die Antriebsrolle entlang einer mit der radialen Richtung der Antriebsrolle zusammenfallenden Bewegungsrichtung relativ zu dem Basiselement translatorisch bewegbar. Auf diese Weise kann zumindest die Antriebsrolle entlang der Bewegungsrichtung relativ zu dem Basiselement und somit relativ zu dem Fahrzeug translatorisch bewegt werden, während der Hilfsantrieb über das Basiselement an dem Fahrzeug gehalten und somit montiert ist. Auf diese ist es beispielsweise möglich, die zunächst von dem Rad beabstandete Antriebsrolle entlang der Bewegungsrichtung translatorisch auf das Rad zuzubewegen und dabei in Kontakt beziehungsweise in Stützanlage mit dem Rad zu bewegen. Ferner ist es denkbar, die zunächst sich in Stützanlage mit dem Rad befindende Antriebsrolle entlang der Bewegungsrichtung translatorisch weg von dem Rad zu bewegen, um dadurch die Antriebsrolle von dem Rad zu beabstanden.

Dabei hat es sich als besonders vorteilhaft gezeigt, wenn die Abstützrichtung mit der Bewegungsrichtung zusammenfällt, sodass die Antriebsrolle in die Abstützrichtung relativ zu dem Basiselement translatorisch in Stützanlage mit dem Rad bewegt werden kann. Befindet sich somit die Antriebsrolle zunächst nicht in Stützanlage mit dem Rad, das heißt ist die Antriebsrolle zunächst von dem Rad beabstandet, so kann die Antriebsrolle dadurch in Stützanlage und somit in Kontakt mit dem Rad bewegt werden, dass die Antriebsrolle in die mit der Bewegungsrichtung zusammenfallende Abstützrichtung relativ zu dem Rad und relativ zu dem Aufbau translatorisch bewegt wird, wodurch die Antriebsrolle auf das Rad zubewegt wird. Dabei wird die Antriebsrolle solange in die Abstützrichtung translatorisch bewegt, bis sich die Antriebsrolle, insbesondere ihre außenumfangsseitige Mantelfläche, in Stützanlage mit dem Rad befindet.

Um den Hilfsantrieb besonders bedarfsgerecht relativ zu dem Fahrzeug positionieren und dabei das Rad besonders vorteilhaft mittels der Antriebsrolle antreiben zu können, ist es in weiterer Ausgestaltung der Erfindung vorgesehen, dass sich der Teil der außenumfangsseitigen Mantelfläche in Umfangsrichtung der Antriebsrolle über wenigstens 45 Grad, insbesondere über wenigstens 60 Grad und vorzugsweise über wenigstens 90 Grad, erstreckt.

**In** weiterer Ausgestaltung der Erfindung um den Bauraumbedarf des Getriebes besonders gering halten zu können, sodass in der Folge zumindest der Teil der außenumfangsseitigen Mantelfläche das Gehäuse in radialer Richtung der Antriebsrolle besonders weit und vorzugsweise weiter als 10 Millimeter überragen kann, ist es bei einer weiteren Ausführungsform der Erfindung vorgesehen, dass das Getriebe wenigstens ein Hohlrad und wenigstens ein Zahnrad umfasst, wobei das Hohlrad eine Innenverzahnung und das Zahnrad eine, insbesondere mit der Innenverzahnung korrespondierende, Außenverzahnung aufweist. Dabei stehen die Innenverzahnung und die Außenverzahnung miteinander in Eingriff, sodass das Zahnrad über die Außenverzahnung und über die Innenverzahnung mit dem Hohlrad kämmt. Dadurch ist die Antriebsrolle über das Hohlrad und über das Zahnrad von dem Getriebe beziehungsweise von dem Motor antreibbar.

Dabei hat es sich als besonders vorteilhaft gezeigt, wenn das Hohlrad entlang seiner axialen Richtung zumindest teilweise, insbesondere zumindest überwiegend oder vollständig, in der Antriebsrolle angeordnet ist. Hierdurch kann der Bauraumbedarf besonders gering gehalten werden, sodass zumindest der Teil der außenumfangsseitigen Mantelfläche das Gehäuse insgesamt besonders weit überragen kann.

Eine weitere Ausführungsform zeichnet sich dadurch aus, dass das Hohlrad drehfest mit der Antriebsrolle verbunden ist. Hierdurch können der Bauraumbedarf und die Kosten sowie das Gesicht des Hilfsantriebs besonders gering gehalten werden. Alternativ oder zusätzlich ist das Hohlrad koaxial zu der Antriebsrolle angeordnet, sodass die axiale Richtung des Hohlrads mit der axialen Richtung der Antriebsrolle zusammenfällt beziehungsweise sodass das Hohlrad und die Antriebsrolle über die zuvor genannte, dem Hohlrad und der Antriebsrolle gemeinsame Drehachse relativ zu dem Gehäuse drehbar sind.

Eine besonders vorteilhafte Ausführungsform der Erfindung sieht vor, dass das Zahnrad entlang seiner axialen Richtung zumindest teilweise, insbesondere zumindest überwiegend oder vollständig, in der Antriebsrolle angeordnet ist. Hierdurch kann der Bauraumbedarf des Getriebes besonders gering gehalten werden. In weiterer Ausgestaltung der Erfindung weist das Getriebe einen Kurbelantrieb mit wenigstens einer gelenkig und dabei exzentrisch mit der Antriebsrolle gekoppelten Kurbel auf, über welche die Antriebsrolle von dem Motor antreibbar und dadurch relativ zu dem Gehäuse drehbar ist. Hierdurch kann der Bauraumbedarf des Getriebes besonders gering gehalten werden, sodass zumindest der Teil der außenumfangsseitigen Mantelfläche der Antriebsrolle das Gehäuse, insbesondere in die Abstützrichtung, besonders vorteilhaft und besonders weit überragen kann.

Bei einer besonders vorteilhaften Ausführungsform der Erfindung ist auch der vorzugsweise als Elektromotor ausgebildete Motor in dem Gehäuse aufgenommen. Der Motor, das Getriebe und die Antriebsrolle bilden beispielsweise eine Antriebseinheit, welche vorzugsweise entlang der Bewegungsrichtung relativ zu dem Basiselement translatorisch bewegt werden kann. Somit sind beispielsweise der Motor und das Getriebe mit der Antriebsrolle entlang der Bewegungsrichtung relativ zu dem Basiselement translatorisch mitbewegbar.

Schließlich hat es sich als besonders vorteilhaft gezeigt, wenn der Motor eine Bremse aufweist. Mit anderen Worten ist der Motor vorzugsweise mit einer Bremse ausgestattet. Mittels der Bremse kann die Antriebsrolle über das Getriebe gegen eine Drehung um die Drehachse relativ zu dem Gehäuse gesichert werden, wodurch beispielsweise das Rad über die Antriebsrolle gegen unerwünschte Drehungen, insbesondere relativ zu einem Aufbau des Fahrzeugs, gesichert werden kann. Ist der Motor mit einer solchen Bremse ausgestattet, so kann als das Getriebe ein nicht-selbsthemmendes Getriebe, das heißt ein Getriebe ohne Selbsthemmung verwendet werden, wodurch der Bauraumbedarf des Getriebes in einem besonders geringen Rahmen gehalten werden kann. Da mittels der Bremse unerwünschte Drehungen der Antriebsrolle und somit des beispielsweise sich in Kontakt mit der Antriebsrolle befindenden Rads vermieden werden kann, kann beispielsweise das Fahrzeug dann gegen ein unerwünschtes Wegrollen gesichert werden, wenn das Fahrzeug an einer Steigung beziehungsweise an einem Gefälle abgestellt wird.

Der zuvor beschriebene Hilfsantrieb ist beispielsweise ein erster Aspekt der Erfindung. Ein unabhängiger beziehungsweise eigenständiger zweiter Aspekt der Erfindung betrifft einen Hilfsantrieb für ein Fahrzeug, insbesondere für einen Anhänger, mit einem Motor, mit einem von dem Motor antreibbaren Getriebe, mit einem Gehäuse, in welchem zumindest das Getriebe zumindest teilweise aufgenommen ist, und mit wenigstens einer über das Getriebe von dem Motor antreibbaren und dadurch relativ zu dem Gehäuse drehbaren Antriebsrolle, welche in radialer Richtung der Antriebsrolle in Stützanlage mit wenigstens einem Rad des Fahrzeugs bewegbar ist, sodass durch Antreiben der Antriebsrolle das Rad über die Antriebsrolle und das Getriebe von dem Motor antreibbar ist.

Bei dem zweiten Aspekt ist es erfindungsgemäß vorgesehen, dass das Getriebe wenigstens ein eine Innenverzahnung aufweisendes Hohlrad und wenigstens ein eine Außenverzahnung aufweisendes Zahnrad umfasst, welches über die Außenverzahnung und die Innenverzahnung mit dem Hohlrad kämmt. Hierdurch können beispielsweise das Getriebe und somit das Gehäuse besonders kompakt ausgestaltet werden, sodass der Bauraumbedarf des Hilfsantriebs besonders gering gehalten werden kann. Insbesondere können hierdurch die Vorteile des ersten Aspekts der Erfindung realisiert werden. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Bei einer vorteilhaften Ausführungsform des zweiten Aspekts ist es vorgesehen, dass das Hohlrad entlang seiner axialen Richtung zumindest teilweise, insbesondere zumindest überwiegend oder vollständig, in der Antriebsrolle angeordnet ist und/oder dass das Hohlrad drehfest mit der Antriebsrolle verbunden ist und/oder dass das Hohlrad koaxial zu der Antriebsrolle angeordnet ist.

Bei einer weiteren vorteilhaften Ausführungsform des zweiten Aspekts ist es vorgesehen, dass das Zahnrad entlang seiner axialen Richtung zumindest teilweise, insbesondere zumindest überwiegend oder vollständig, in der Antriebsrolle angeordnet ist.

Ein unabhängiger beziehungsweise eigenständiger dritter Aspekt der Erfindung betrifft einen Hilfsantrieb für ein Fahrzeug, insbesondere für einen Anhänger, mit einem Motor, mit einem von dem Motor antreibbaren Getriebe, mit einem Gehäuse, in welchem zumindest das Getriebe zumindest teilweise aufgenommen ist, und mit wenigstens einer über das Getriebe von dem Motor antreibbaren und dadurch relativ zu dem Gehäuse drehbaren Antriebsrolle, welche in radialer Richtung der Antriebsrolle in Stützanlage mit wenigstens einem Rad des Fahrzeugs bewegbar ist, sodass durch Antreiben der Antriebsrolle das Rad über die Antriebsrolle und das Getriebe von dem Motor antreibbar ist.

Bei dem dritten Aspekt ist es erfindungsgemäß vorgesehen, dass das Getriebe einen Kurbelantrieb mit wenigstens einer gelenkig und exzentrisch mit der Antriebsrolle gekoppelten Kurbel aufweist, über welche die Antriebsrolle von dem Motor antreibbar und dadurch relativ zu dem Gehäuse drehbar ist. Hierdurch können beispielsweise das Getriebe und somit das Gehäuse besonders kompakt ausgestaltet werden, sodass der Bauraumbedarf des Hilfsantriebs besonders gering gehalten werden kann. Insbesondere können hierdurch die Vorteile des ersten Aspekts der Erfindung realisiert werden. Vorteile und vorteilhafte Ausgestaltungen des ersten Aspekts der Erfindung und des zweiten Aspekts der Erfindung sind als Vorteile und vorteilhafte Ausgestaltungen des dritten Aspekts der Erfindung anzusehen und umgekehrt.

Zur Erfindung gehört auch ein Anhänger, insbesondere ein Wohnwagen, ein Bootsanhänger, ein Verkaufswagen, ein Transportanhänger oder ein Autotransportanhänger, mit wenigstens einem Hilfsantrieb gemäß dem ersten Aspekt und/oder dem zweiten Aspekt und/oder dem dritten Aspekt der Erfindung. Vorteile und vorteilhafte Ausgestaltungen des ersten Aspekts, des zweiten Aspekts und des dritten Aspekts der Erfindung sind als Vorteile und vorteilhafte Ausgestaltungen des erfindungsgemäßen Anhängers anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendet, ohne den Rahmen der Erfindung zu verlassen.

Die Zeichnung zeigt in:
- Fig. 1: eine schematische und teilweise geschnittene Perspektivansicht eines erfindungsgemäßen Hilfsantriebs gemäß einer ersten Ausführungsform;
- Fig. 2: eine schematische und teilweise geschnittene Perspektivansicht des Hilfsantriebs gemäß einer zweiten Ausführungsform;
- Fig. 3: ausschnittsweise eine weitere schematische und teilweise geschnittene Perspektivansicht des Hilfsantriebs gemäß der zweiten Ausführungsform;
- Fig. 4: eine schematische Draufsicht einer Halteanordnung des Hilfsantriebs gemäß der ersten Ausführungsform an einem Fahrzeug;
- Fig. 5: ausschnittsweise eine weitere schematische Draufsicht der Halteanordnung gemäß Fig. 4;
- Fig. 6: eine schematische Draufsicht einer weiteren Halteanordnung des Hilfsantriebs gemäß der zweiten Ausführungsform an dem Fahrzeug;
- Fig. 7: eine weitere schematische Draufsicht der Halteanordnung gemäß Fig. 6;
- Fig. 8: eine schematische Perspektivansicht einer Antriebsrolle des Hilfsantriebs;
- Fig. 9: ausschnittsweise eine schematische und geschnittene Perspektivansicht der Antriebsrolle;
- Fig. 10: eine schematische Längsschnittansicht der Antriebsrolle;
- Fig. 11: eine weitere schematische Perspektivansicht der Antriebsrolle;
- Fig. 12: eine schematische und teilweise geschnittene Perspektivansicht des Hilfsantriebs gemäß der ersten Ausführungsform;
- Fig. 13: ausschnittsweise eine weitere schematische und teilweise geschnittene Perspektivansicht des Hilfsantriebs gemäß der zweiten Ausführungsform;
- Fig. 14: eine schematische und teilweise geschnittene Perspektivansicht des Hilfsantriebs gemäß der zweiten Ausführungsform;
- Fig. 15: eine schematische und teilweise geschnittene Perspektivansicht des Hilfsantriebs gemäß der ersten Ausführungsform;
- Fig. 16: eine schematische Perspektivansicht der Hilfsantriebs gemäß der ersten Ausführungsform;
- Fig. 17: eine weitere schematische Perspektivansicht des Hilfsantriebs gemäß der ersten Ausführungsform;
- Fig. 18: ausschnittsweise eine schematische Draufsicht des Hilfsantriebs gemäß der ersten Ausführungsform;
- Fig. 19: eine schematische und teilweise geschnittene Seitenansicht des Hilfsantriebs gemäß der ersten Ausführungsform; und
- Fig. 20: ausschnittsweise eine schematische Perspektivansicht des Hilfsantriebs gemäß einer dritten Ausführungsform.

In den Fig. sind gleiche oder funktionsgleiche Elemente mit gleichen Bezugszeichen versehen.

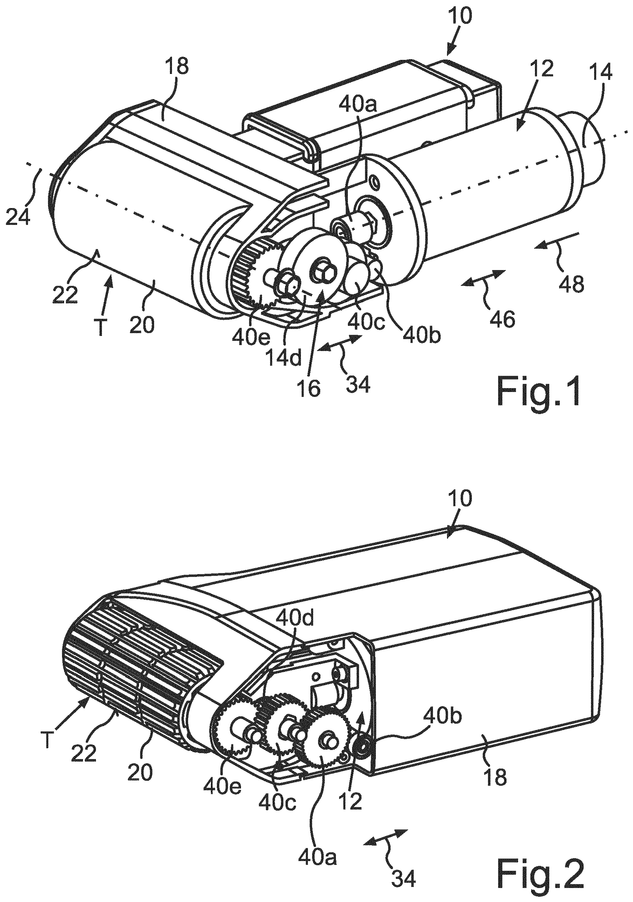

Fig. 1 zeigt in einer schematischen und teilweise geschnittenen Perspektivansicht einen auch als Rangierantrieb oder Rangierhilfe bezeichneten Hilfsantrieb 10 gemäß einer ersten Ausführungsform für ein Fahrzeug, insbesondere für ein motorloses Fahrzeug. Unter dem motorlosen Fahrzeug ist ein solches Fahrzeug zu verstehen, welches keinen eigenen Motor aufweist und sich somit selbst nicht aus eigener Kraft antreiben kann. Bei dem Fahrzeug handelt es sich vorzugsweise um einen Anhänger wie beispielsweise einen Wohnwagen, einen Bootsanhänger, einen Verkaufswagen, einen Transportanhänger, einen Autotransportanhänger oder einen Caravan. Der Hilfsantrieb 10 umfasst einen vorzugsweise als Elektromotor ausgebildeten Motor 12, welcher einen Stator und einen Rotor aufweist. Der Rotor ist von dem Stator antreibbar und dadurch um eine Motordrehachse 14 relativ zu dem Stator drehbar. Der Rotor weist beispielsweise eine Motorwelle auf. Der Motor 12 kann, insbesondere über den Rotor und dabei insbesondere über die Motorwelle, wenigstens ein Drehmoment bereitstellen. Der Hilfsantrieb 10 umfasst darüber hinaus ein in Fig. 1 teilweise erkennbares Getriebe 16, welches von dem Motor 12 angetrieben werden kann. Dies bedeutet, dass das von dem Motor 12 bereitgestellte Drehmoment in das Getriebe 16 eingeleitet werden kann. Der Hilfsantrieb 10 weist darüber hinaus ein beispielsweise aus Fig. 1 teilweise erkennbares Gehäuse 18 auf, in welchem zumindest das Getriebe 16 zumindest teilweise, insbesondere zumindest überwiegend oder vollständig, aufgenommen ist. Daher wird das Gehäuse 18 auch als Getriebegehäuse bezeichnet. Das Gehäuse 18 ist vorzugsweise das äußerste Gehäuse des Hilfsantriebs 10. Weist beispielsweise der Hilfsantrieb 10 mehrere Gehäuse auf, welche zumindest teilweise ineinander angeordnet sein können, so ist das Gehäuse 18 vorzugsweise das äußerste Gehäuse des Hilfsantriebs 18, wobei das Getriebe 16 zumindest teilweise in dem äußersten Gehäuse aufgenommen ist.

Des Weiteren weist der Hilfsantrieb 10 eine auch als Antriebswalze bezeichnete Antriebsrolle 20 mit einer außenumfangsseitigen Mantelfläche 22 auf, welche einen maximalen Außendurchmesser und somit einen maximalen Außenumfang der Antriebsrolle 20 bildet beziehungsweise definiert. Dies bedeutet, dass die außenumfangsseitige Mantelfläche 22 auf dem größten beziehungsweise maximalen Außendurchmesser der Antriebsrolle 20 angeordnet ist. Die Antriebsrolle 20 ist über das Getriebe 16 von dem Motor 12 antreibbar und dadurch um eine Drehachse 24 relativ zu dem Gehäuse 18 drehbar. Beispielsweise verläuft die Drehachse 24 senkrecht zu eiern ersten Ebene, sodass die Drehachse 24 eine erste Ebenennormale der ersten Ebene ist. Die Motordrehachse 14 verläuft beispielsweise senkrecht zu einer zweiten Ebene, sodass die Motordrehachse 14 eine zweite Ebenennormale der zweiten Ebene ist. Dabei verlaufen die Ebenen beispielsweise schräg oder vorzugsweise senkrecht zueinander.

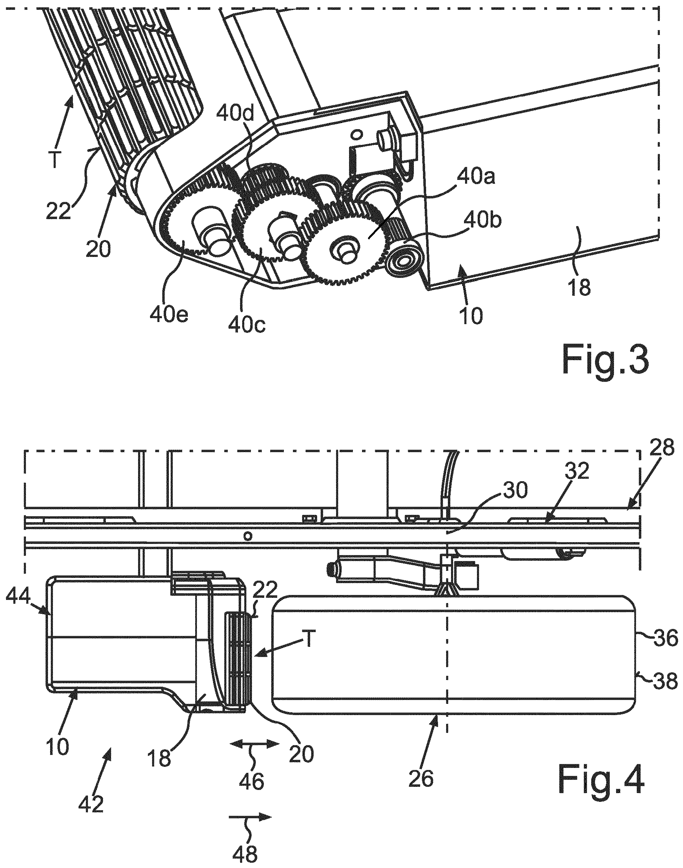

Die Antriebsrolle 20 ist in radialer Richtung der Antriebsrolle 20 in Stützanlage mit wenigstens einem aus Fig. 4 erkennbaren Rad 26 des in Fig. 4 insgesamt mit 28 bezeichneten Fahrzeugs bewegbar, sodass durch Antreiben der Antriebsrolle 20 das Rad 26 über die Antriebsrolle 20 und über das Getriebe 16 von dem Motor 12 angetrieben und dadurch um eine Raddrehachse 30 (Fig. 4) relativ zu einem in den Fig. nicht erkennbaren Aufbau des Fahrzeugs gedreht werden kann. Aus Fig. 4 ist erkennbar, dass das Rad 26 beispielsweise drehbar an einem Rahmen 32 des Fahrzeugs gehalten ist, sodass sich das Rad 26 grundsätzlich um die Raddrehachse 30 relativ zu dem Rahmen 32 und somit relativ zu dem Aufbau drehen kann. Der Aufbau begrenzt beispielsweise einen Aufenthaltsraum für Personen.

In Fig. 1 ist die radiale Richtung der Antriebsrolle 20 durch einen Doppelpfeil 34 veranschaulicht. Die radiale Richtung verläuft dabei senkrecht zur axialen Richtung der Antriebsrolle 20, wobei die axiale Richtung der Antriebsrolle 20 mit der Drehachse 24 zusammenfällt. Somit verläuft beispielsweise die radiale Richtung der Antriebsrolle 20 in der ersten Ebene beziehungsweise die radiale Richtung verläuft in der ersten Ebene.

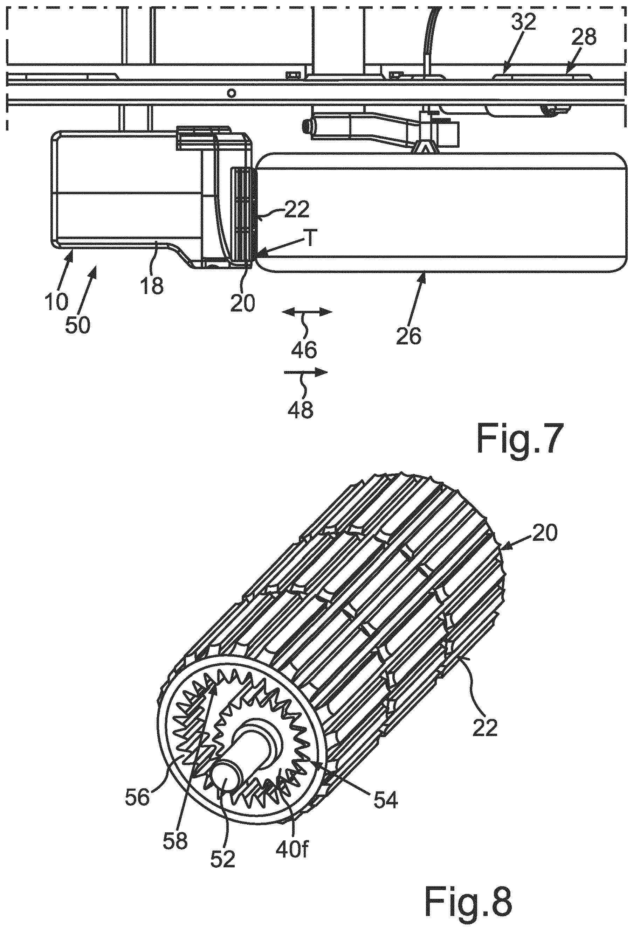

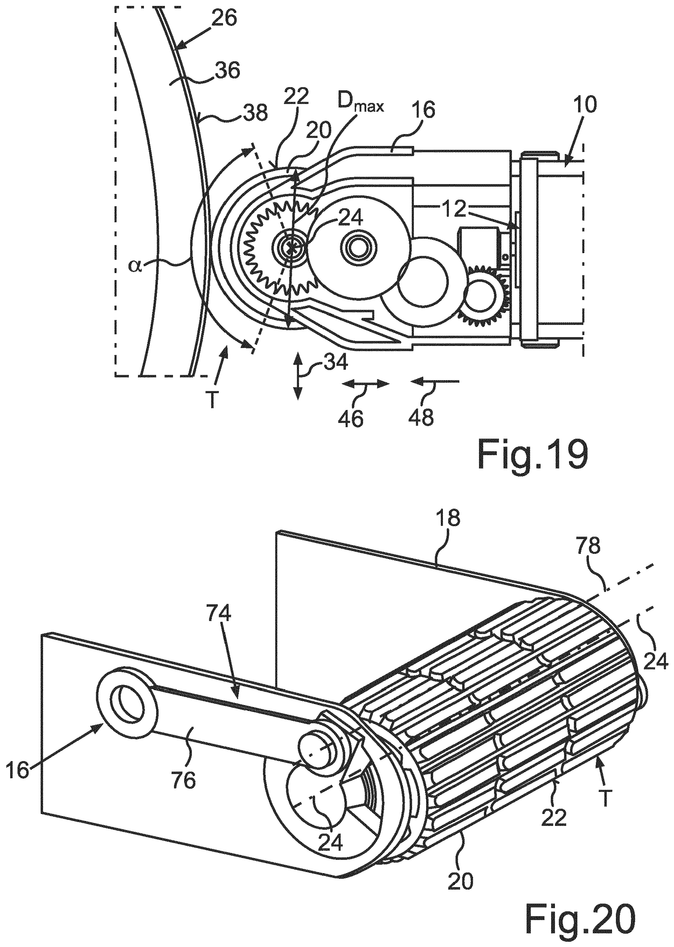

Um nun zumindest die Antriebsrolle 20 und vorzugsweise den Hilfsantrieb 10 insgesamt besonders vorteilhaft an dem Fahrzeug anordnen und somit montieren sowie insbesondere relativ zu dem Fahrzeug, insbesondere relativ zu dem Rad 26, positionieren zu können, überragt zumindest ein Teil T der den maximalen Außendurchmesser der Antriebsrolle 20 bildenden außenumfangsseitigen Mantelfläche 22 der Antriebsrolle 20 das Gehäuse 18 in radialer Richtung der Antriebsrolle 20 um wenigstens 10 Millimeter, vorzugsweise um mehr als 10 Millimeter. Der maximale Außendurchmesser der Antriebsrolle 20 ist besonders gut aus Fig. 19 erkennbar und dort mit Dₘₐₓ bezeichnet. Des Weiteren ist in Fig. 19 ein Winkel, über den sich der Teil T in um die Drehachse 24 verlaufender Umfangsrichtung der Antriebsrolle 20 erstreckt, mit α bezeichnet. Der Winkel α beträgt vorzugsweise mindestens 120 Grad, insbesondere mindestens 130 Grad und vorzugsweise mindestens 140 Grad oder mindestens 150 Grad. Hierdurch kann der Hilfsantrieb 10 besonders flexibel in axialer Richtung der Antriebsrolle 20 relativ zu dem Fahrzeug positioniert werden, und die Antriebsrolle 20, insbesondere die außenumfangsseitige Mantelfläche 22, kann in radialer Richtung der Antriebsrolle 20 besonders vorteilhaft in Stützanlage mit dem Rad 26, insbesondere mit einem Reifen 36 des Rads 26 und dabei mit einer Lauffläche 38 des Reifens 36 bewegt werden. Aus Fig. 1 und 2 ist besonders gut erkennbar, dass das Getriebe 16 eine Mehrzahl von Zahnrädern 40a-f (Fig. 8) aufweist. Die jeweiligen Zahnräder 40a-f sind beispielsweise jeweilige Stirnräder, welche miteinander kämmen, das heißt welche miteinander in Eingriff stehen. Somit bilden beispielsweise jeweils zwei der Zahnräder 40a-f eine jeweilige Stirnradstufe. Die Zahnräder 40a-f sind in einem Drehmomentenpfad angeordnet, über welchen das von dem Motor 12 bereitgestellt Drehmoment zu dem und insbesondere auf die Antriebsrolle 20 übertragen wird, um dadurch die Antriebsrolle 20 anzutreiben. Die in dem Drehmomentenpfad letzte Stirnradstufe wird auch als letzte Stirnradstufe bezeichnet. Das jeweilige Zahnrad 40a-f ist dabei um eine jeweilige Zahnraddrehachse relativ zu dem Gehäuse 18 drehbar, wobei die jeweilige Zahnraddrehachse senkrecht zur ersten Ebene verläuft. Zumindest eine der Zahnraddrehachse kann mit der Drehachse 24 zusammenfallen. Ferner ist es denkbar, dass alle Zahnraddrehachsen von der Drehachse 24 beabstandet sind. Die Zahnräder 40a-e sind besonders gut aus Fig. 2 und 3 erkennbar, wobei Fig. 2 und 3 eine zweite Ausführungsform des Hilfsantriebs 10 zeigen.

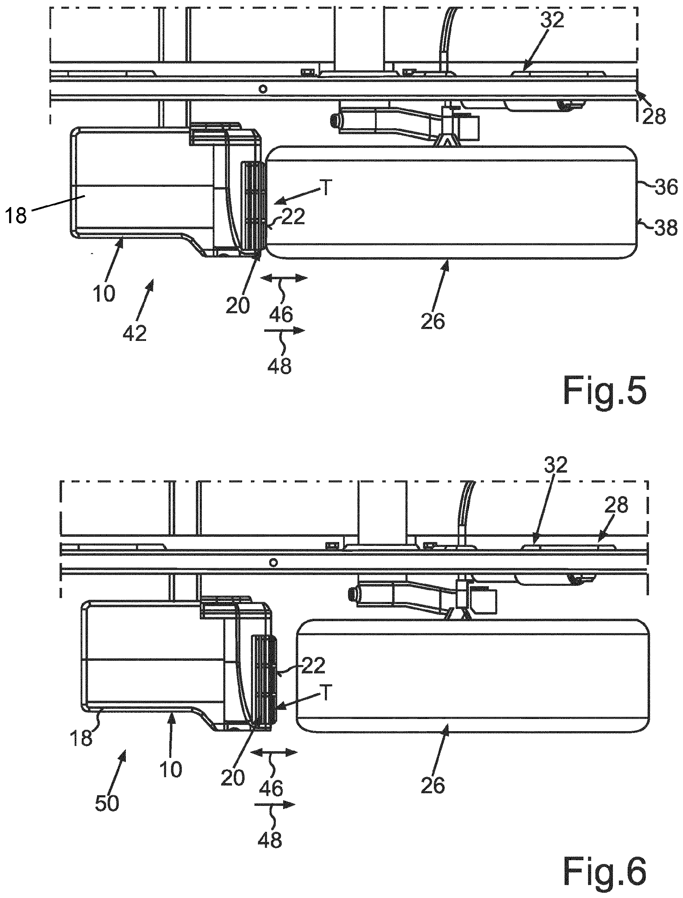

Fig. 4 und 5 zeigen jeweils in einer schematischen Draufsicht eine Halteanordnung 42 des Hilfsantriebs 10, insbesondere gemäß der zweiten Ausführungsform, an dem Fahrzeug. Dabei weist der Hilfsantrieb 10 ein Basiselement 44 auf, welches an dem Fahrzeug, insbesondere an dem Rahmen 32, befestigt ist. Somit ist der Hilfsantrieb 10 über das Basiselement 44 an dem Rahmen 32 und somit an dem Fahrzeug befestigt beziehungsweise gehalten. Dabei kann das Basiselement 44 das Gehäuse 18 umfassen. **In** über das Basiselement 44 an dem Rahmen 32 gehaltenem Zustand ist zumindest die Antriebsrolle 20 entlang einer in Fig. 4 durch einen Doppelpfeil 46 veranschaulichten Bewegungsrichtung relativ zu dem Basiselement 44 und somit relativ zu dem Rahmen 32 und somit relativ zu dem Fahrzeug translatorisch bewegbar. Hierdurch kann die Antriebsrolle 20 entlang der Bewegungsrichtung translatorisch relativ zu dem Rad 26 bewegt werden. Insbesondere ist es möglich, zumindest die Antriebsrolle 20 entlang der Bewegungsrichtung relativ zu dem Rad 26 zwischen wenigstens einer in Fig. 4 gezeigten Ausgangsstellung und wenigstens einer in Fig. 5 gezeigten Antriebsstellung zu bewegen. **In** der Ausgangsstellung sind die Antriebsrolle 20 und somit ihre außenumfangsseitige Mantelfläche 22 von dem Rad 26 und insbesondere von der Lauffläche 38 beabstandet. In der in Fig. 5 gezeigten Antriebsstellung jedoch befinden sich die außenumfangsseitige Mantelfläche 22 und somit die Antriebsrolle 20 in radialer Richtung der Antriebsrolle 20 in Stützanlage und somit in Kontakt mit der Lauffläche 38 und somit mit dem Rad 26. Wird die Antriebsrolle 20 angetrieben und somit um die Drehachse 24 relativ zu dem Gehäuse 18 gedreht, während sich die Antriebsrolle 20 über ihre außenumfangsseitige Mantelfläche 22 in Stützanlage mit dem Rad 26 befindet, so wird dadurch das Rad 26 mittels des Motors 12 angetrieben und somit um die Raddrehachse 30 relativ zu dem Rahmen 32 und somit relativ zu dem Aufbau gedreht. Hierdurch kann das Fahrzeug mittels des Hilfsantriebs 10 angetrieben und somit beispielsweise rangiert werden. Die Bewegungsrichtung fällt dabei mit der radialen Richtung der Antriebsrolle 20 zusammen. Ferner verläuft beispielsweise bezogen auf die Halteanordnung 42 die Raddrehachse 30 senkrecht zur zuvor beschriebenen ersten Ebene, sodass beispielsweise die Raddrehachse 30 und die Drehachse 24 parallel zueinander verlaufen.

Um die Antriebsrolle 20 aus der Ausgangsstellung in die Antriebsstellung zu bewegen, wird die Antriebsrolle 20 in eine mit der Bewegungsrichtung zusammenfallende und in Fig. 4 durch einen Pfeil 48 veranschaulichte Abstützrichtung relativ zu dem Fahrzeug und relativ zu dem Rad 26 translatorisch bewegt und hierdurch in Stützanlage mit der Lauffläche 38 bewegt. Somit ist die Antriebsrolle 20 über ihre außenumfangsseitige Mantelfläche 22 in die mit der radialen Richtung der Antriebsrolle 20 zusammenfallende Abstützrichtung (Pfeil 48) in Stützanlage mit dem Rad 26 bewegbar. Dabei überragt zumindest der Teil T der außenumfangsseitigen Mantelfläche 22 das Gehäuse 18 zumindest in die Abstützrichtung. Dies bedeutet, dass das Gehäuse 18 die Antriebsrolle 20 in die Abstützrichtung nicht überragt, sondern in eine der Abstützrichtung entgegengesetzte Rückzugsrichtung gegenüber zumindest dem Teil T zurückversetzt ist und dabei um wenigstens 10 Millimeter. Um die sich beispielsweise in der Antriebsstellung befindende Antriebsrolle 20 aus der Antriebsstellung in die Ausgangsstellung zu bewegen, wird die Antriebsrolle 20 in die Rückzugsstellung relativ zu dem Rahmen 32 translatorisch bewegt. Hierdurch wird die Antriebsrolle 20 von dem Rad 26 wegbewegt. Wird die Antriebsrolle 20 in die Abstützrichtung bewegt, so wird die Antriebsrolle 20 auf das Rad 26 zubewegt.

Besonders gut aus Fig. 4 ist erkennbar, dass unter dem Merkmal, dass zumindest der Teil T das Gehäuse 18 in radialer Richtung der Antriebsrolle 20 und dabei in die Abstützrichtung wenigstens 10 Millimeter überragt, zu verstehen ist, dass zumindest der Teil T der außenumfangsseitigen Mantelfläche 22 in axialer Richtung der Antriebsrolle 20 überdeckungsfrei zu dem Gehäuse 18 angeordnet ist. Somit wird der Teilbereich T in axialer Richtung der Antriebsrolle 20 jeweils beidseitig nach außen hin nicht durch das Gehäuse 18 überdeckt.

Fig. 6 und 7 zeigen eine weitere Halteanordnung 50 des Hilfsantriebs 10 an dem Rahmen 32 und an dem Fahrzeug. Der Unterschied zwischen den Halteanordnungen 42 und 50 ist, dass der Hilfsantrieb 10 bei der Halteanordnung 50 in axialer Richtung der Antriebsrolle 20 und somit in Fahrzeugquerrichtung weiter außen als bei der Halteanordnung 42 angeordnet ist. Somit ist erkennbar, dass dadurch, dass zumindest der Teil T das Gehäuse 18 um wenigstens 10 Millimeter überragt, die Antriebsrolle 20 entlang ihrer axialen Richtung zumindest nahezu frei relativ zu dem Rad 26 positioniert werden kann.

Wie besonders gut aus Fig. 2 und 8 erkennbar ist, weist beispielsweise die außenumfangsseitige Mantelfläche 22 eine Mehrzahl von in Umfangsrichtung der Antriebsrolle 20 aufeinanderfolgend und voneinander beabstandeten Zähnen auf, zwischen welchen jeweilige Zahnlücken angeordnet sind. Hierdurch kann ein besonders vorteilhafter Kraft- und/oder Formschluss zwischen der Antriebsrolle 20 und dem Reifen 36 in der Antriebsstellung realisiert werden, sodass auch besonders große Drehmomente zwischen der Antriebsrolle 20 und dem Rad 26 übertragen werden können.

Ferner ist aus Fig. 8 erkennbar, dass beispielsweise das Zahnrad 40f drehfest mit einer Welle 52 verbunden ist. Somit kann das Zahnrad 40f über die Welle 52 von dem Motor 12 angetrieben werden.

Des Weiteren ist besonders gut aus Fig. 8 erkennbar, dass das Zahnrad 40f eine Außenverzahnung 54 aufweist. Des Weiteren weist das Getriebe 16 wenigstens ein Hohlrad 56 mit einer beispielsweise mit der Außenverzahnung 54 korrespondierenden Innenverzahnung 58 auf. Dabei stehen die Außenverzahnung 54 und die Innenverzahnung 58 miteinander in Eingriff, sodass das Zahnrad 40f über die Außenverzahnung 54 und über die Innenverzahnung 58 mit dem Hohlrad 56 kämmt. Dabei ist das Hohlrad 56 drehfest mit der Antriebsrolle 20 verbunden, und das Hohlrad 56 ist koaxial zu der Antriebsrolle 20 angeordnet. Somit sind das Hohlrad 56 und die Antriebsrolle 20 gemeinsam beziehungsweise gleichzeitig um die Drehachse 24 relativ zu dem Gehäuse 18 drehbar. Außerdem ist das Hohlrad 56 entlang seiner mit der axialen Richtung der Antriebsrolle 20 zusammenfallenden axialen Richtung vollständig in der Antriebsrolle 20 angeordnet. Insbesondere ist es denkbar, dass das Hohlrad 56 einstückig mit der Antriebsrolle 20 ausgebildet ist. Das Zahnrad 40f ist beispielsweise um eine von der Drehachse 24 beabstandete der Zahnraddrehachsen relativ zu dem Gehäuse 18 drehbar. Somit ist beispielsweise das Zahnrad 40f exzentrisch zur Antriebsrolle 20 und somit zum Hohlrad 56 angeordnet. Außerdem ist das Zahnrad 40f entlang seiner axialen Richtung vollständig in der Antriebsrolle 20 angeordnet. Hierdurch kann der Bauraumbedarf des Getriebes 16 besonders gering gehalten werden.

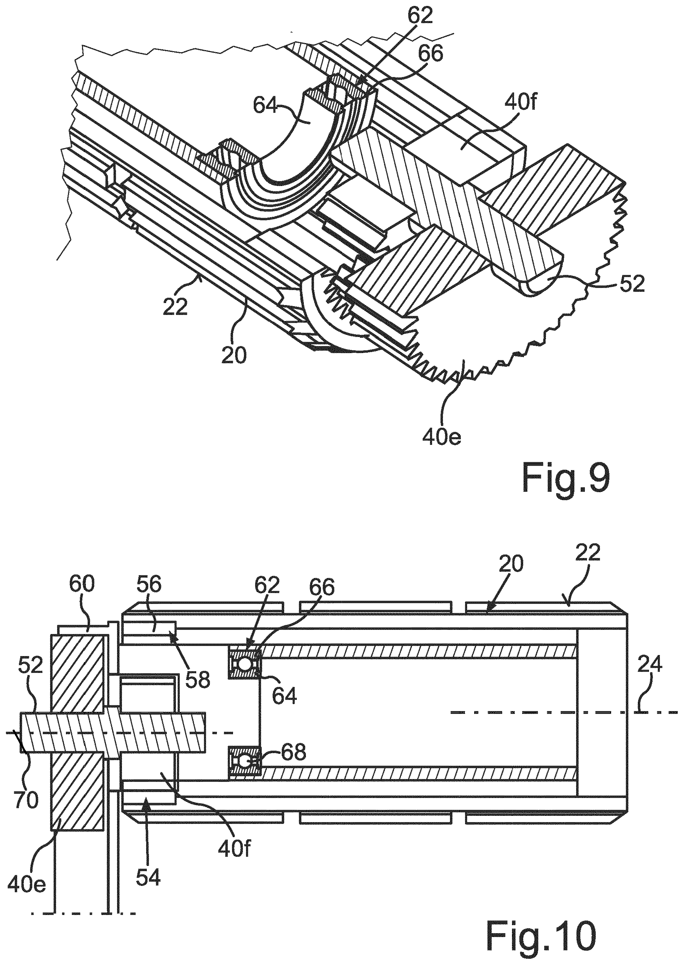

Aus Fig. 9 ist erkennbar, dass beispielsweise das Zahnrad 40e ebenfalls drehfest mit der Welle 52 verbunden ist. Dadurch kann die Welle 52 von dem Zahnrad 40e angetrieben werden. Hierdurch kann das Zahnrad 40f über die Welle 52 von dem Zahnrad 40e angetrieben werden.

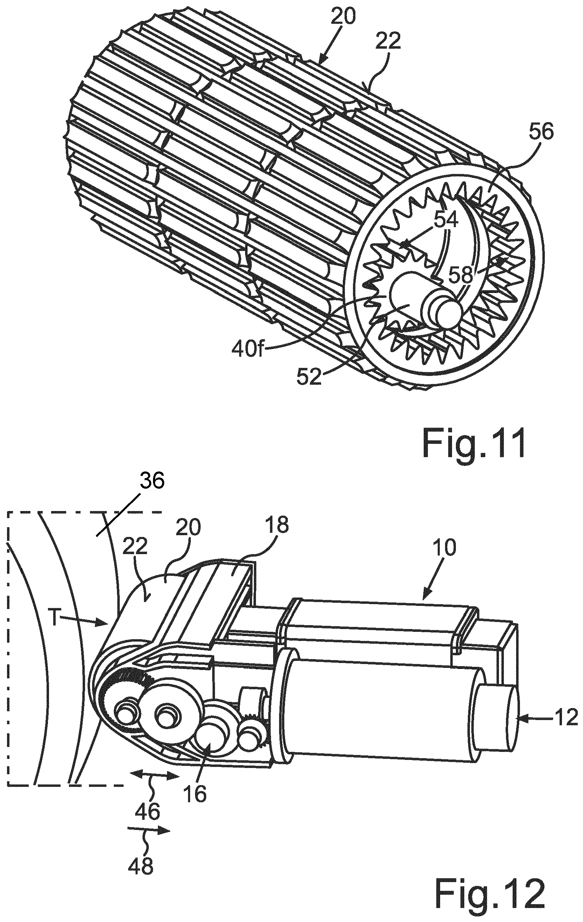

Aus Fig. 10 ist erkennbar, dass zumindest ein Teil 60 des Gehäuses 18 in die Antriebsrolle 20 hineinragt und somit zumindest teilweise in der Antriebsrolle 20 aufgenommen ist. Dabei ist die Antriebsrolle 20 über wenigstens oder genau ein Lager 62 drehbar an dem Teil 60 und somit an dem Gehäuse 18 gelagert. Bei dem Lager 62 handelt es sich vorzugsweise um ein Wälzlager, welches einen Lagerinnenring 64, einen Lageraußenring 66 und beispielsweise als Kugeln ausgebildete Wälzkörper 68 aufweist. Durch diese drehbare Lagerung der Antriebsrolle 20 an dem Teil 60 kann sich die Antriebsrolle 20 um die Drehachse 24 relativ zu dem Teil 60 und somit relativ zu dem Gehäuse 18 drehen. Die zuvor genannte Zahnraddrehachse, um welche die Zahnräder 40e und 40f und die Welle 52 relativ zu dem Gehäuse 18 drehbar sind, ist in Fig. 10 erkennbar und dort mit 70 bezeichnet. Dabei ist die Zahnraddrehachse 70 von der Drehachse 24 beabstandet und somit desachsiert, sodass die Welle 52 und die Zahnräder 40e und 40f exzentrisch zur Antriebsrolle 20 angeordnet sind. Diese Anordnung kann besonders gut aus Fig. 11 erkannt werden.

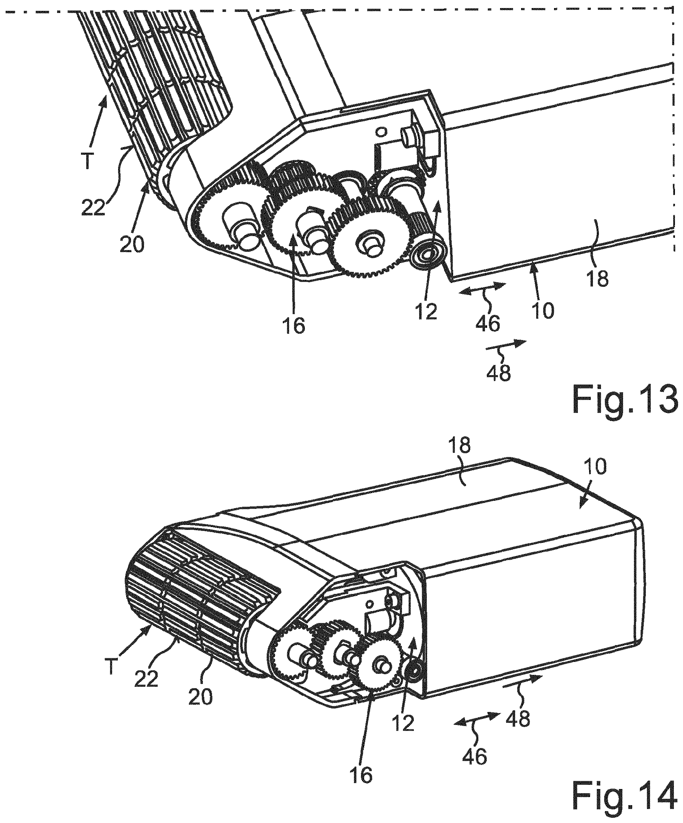

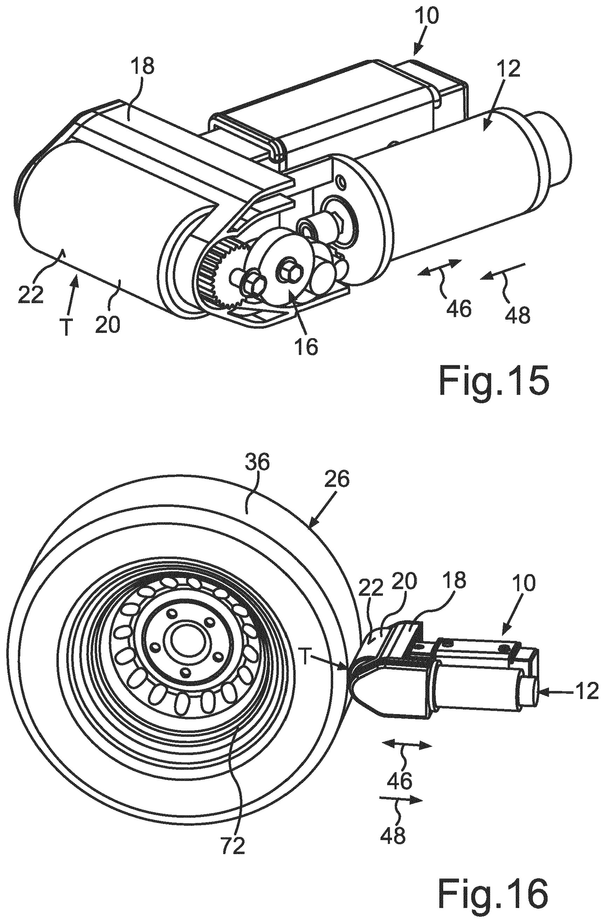

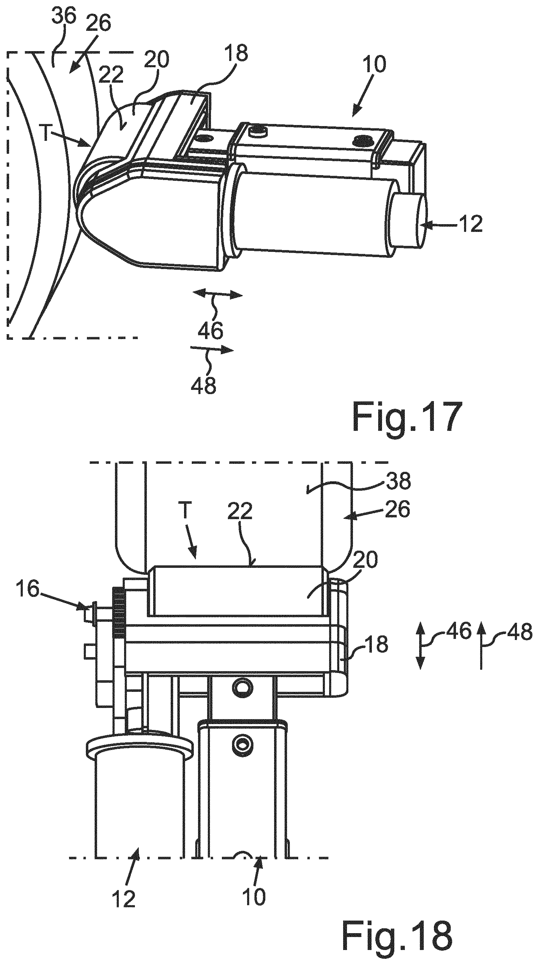

Fig. 12 zeigt den Hilfsantrieb 10 gemäß der ersten Ausführungsform, wobei sich die Antriebsrolle 20 in der Antriebsstellung und somit in Stützanlage mit dem Reifen 36 befindet. Fig. 13 und 14 zeigen eine weitere schematische Perspektivansicht des Hilfsantriebs 10 gemäß der zweiten Ausführungsform, wobei Fig. 15 und 17 weitere Perspektivansichten des Hilfsantriebs 10 gemäß der ersten Ausführungsform zeigen.

Besonders gut aus Fig. 16 erkennbar ist das Rad 26, welches den Reifen 36 und eine Felge 72 umfasst. Dabei ist der Reifen 36 auf die Felge 72 aufgezogen, das heißt auf der Felge 72 angeordnet.

Fig. 18 zeigt den Hilfsantrieb 10 in einer schematischen Draufsicht, wobei sich die Antriebsrolle 20 in Stützanlage mit der Lauffläche 38 befindet. Dadurch, dass die Antriebsrolle 20 zumindest nahezu frei beziehungsweise beliebig entlang der axialen Richtung der Antriebsrolle 20 relativ zu dem Rad 26 positioniert werden kann, kann die Antriebsrolle 20, insbesondere ihre außenumfangsseitige Mantelfläche 22, in besonders vorteilhaften und großflächigen beziehungsweise umfangreichen Kontakt mit der Lauffläche 38 gebracht werden. Dadurch können auch besonders große Drehmomente von der Antriebsrolle 20 auf das Rad 26 übertragen werden.

Schließlich zeigt Fig. 20 ausschnittsweise den Hilfsantrieb 10 gemäß einer dritten Ausführungsform. Bei der dritten Ausführungsform umfasst das Getriebe 16 einen auch als Kurbeltrieb bezeichneten Kurbelantrieb 74, über welchen die Antriebsrolle 20 von dem Motor 12 angetrieben werden kann. Hierzu umfasst der Kurbelantrieb 74 wenigstens eine gelenkig und dabei exzentrisch mit der Antriebsrolle 20 gekoppelte Kurbel 76, welche derart gelenkig und dabei exzentrisch mit der Antriebsrolle 20 gekoppelt ist, dass die Kurbel 76 mit der Antriebsrolle 20 um eine Drehachse 78 relativ zu der Antriebsrolle 20 drehbar gekoppelt ist, wobei die Drehachse 78 parallel zur Drehachse 24 verläuft und von dieser beabstandet ist. Andererseits ist die Kurbel 76 beispielsweise mit einer Exzenterkurbel oder mit einer Exzenterwelle gekoppelt. Wird die Exzenterwelle gedreht, so wird die Kurbel 76 beispielsweise oszillierend relativ zur Antriebsrolle 20 hin- und herbewegt, wodurch die Drehachse 78 um die Drehachse 24 gedreht wird. Hierdurch wird die Antriebsrolle 20 um die Drehachse 24 relativ zum Gehäuse 18 gedreht.

Darüber hinaus ist aus Fig. 2 erkennbar, dass vorzugsweise auch der Motor 12 zumindest teilweise, insbesondere zumindest überwiegend oder vollständig, in dem Gehäuse 18 aufgenommen ist. Als ferner besonders vorteilhaft hat es sich gezeigt, wenn der Motor 12 mit einer Bremse, insbesondere mit einer mechanischen Bremse, ausgestattet beziehungsweise versehen ist. Mittels der Bremse kann beispielsweise die Antriebsrolle 20, insbesondere über das Getriebe 16, gegen eine Drehung relativ zum Gehäuse 18 um die Drehachse 24 gesichert werden. Hierzu wird beispielsweise mittels der Bremse der Rotor kraft- beziehungsweise reibschlüssig und/oder formschlüssig gegen eine Drehung relativ zu dem Stator um die Motordrehachse 14 gesichert, wodurch die Antriebsrolle 20 mittels der Bremse kraftschlüssig und/oder formschlüssig gegen eine Drehung um die Drehachse 24 relativ zu dem Gehäuse 18 gesichert wird. Dadurch kann als das Getriebe 16 ein nicht-selbsthemmendes Getriebe, das heißt ein Getriebe ohne Selbsthemmung verwendet werden. Dadurch können der Bauraumbedarf, das Gewicht und die Kosten in einem besonders geringen Rahmen gehalten werden.

### BEZUGSZEICHENLISTE:

- 10: Hilfsantrieb
- 12: Motor
- 14: Motordrehachse
- 16: Getriebe
- 18: Gehäuse
- 20: Antriebsrolle
- 22: Mantelfläche
- 24: Drehachse
- 26: Rad
- 28: Fahrzeug
- 30: Raddrehachse
- 32: Rahmen
- 34: Doppelpfeil
- 36: Reifen
- 38: Lauffläche
- 40a-f: Zahnrad
- 42: Halteanordnung
- 44: Basiselement
- 46: Doppelpfeil
- 50: Pfeil
- 52: Welle
- 54: Außenverzahnung
- 56: Hohlrad
- 58: Innenverzahnung
- 60: Teil
- 62: Lager
- 64: Lagerinnenring
- 66: Lageraußenring
- 68: Wälzkörper
- 70: Zahnraddrehachse
- 72: Felge
- 74: Kurbelantrieb
- 76: Kurbel
- 78: Drehachse
- Dₘₐₓ: maximale Außendurchmesser
- T: Teil
- A: Winkel

## Patentansprüche

1. Hilfsantrieb (10) für ein Fahrzeug (28), insbesondere für einen Anhänger, mit einem Motor (12), mit einem von dem Motor (12) antreibbaren Getriebe (16), mit einem Gehäuse (18), in welchem zumindest das Getriebe (16) zumindest teilweise aufgenommen ist, und mit wenigstens einer über das Getriebe (16) von dem Motor (12) antreibbaren und dadurch relativ zu dem Gehäuse (18) drehbaren Antriebsrolle (20), welche in radialer Richtung (34) der Antriebsrolle (20) in Stützanlage mit wenigstens einem Rad (26) des Fahrzeugs (28) bewegbar ist, sodass durch Antreiben der Antriebsrolle (20) das Rad (26) über die Antriebsrolle (20) und das Getriebe (16) von dem Motor (12) antreibbar ist, **dadurch gekennzeichnet, dass**
das Getriebe (16) einen Kurbelantrieb (74) mit wenigstens einer gelenkig und exzentrisch mit der Antriebsrolle (20) gekoppelten Kurbel (76) aufweist, über welche die Antriebsrolle (20) von dem Motor (12) antreibbar und dadurch relativ zu dem Gehäuse (18) drehbar ist; und
dass zumindest ein Teil (T) einer den maximalen Außendurchmesser (Dₘₐₓ) der Antriebsrolle (20) bildenden außenumfangsseitigen Mantelfläche (22) der Antriebsrolle (20) das Gehäuse (18) in radialer Richtung (34) der Antriebsrolle (20) um wenigstens 10 Millimeter überragt.

2. Hilfsantrieb (10) nach Anspruch 1,
**dadurch gekennzeichnet, dass**
die Antriebsrolle (20) in eine mit der radialen Richtung (34) der Antriebsrolle (20) zusammenfallende Abstützrichtung (48) translatorisch in Stützanlage mit dem Rad (26) bewegbar ist, wobei zumindest der Teil (T) der außenumfangsseitigen Mantelfläche (22) das Gehäuse (18) in die Abstützrichtung (48) überragt.

3. Hilfsantrieb (10) nach einem der vorhergehenden Ansprüche,
**dadurch gekennzeichnet, dass**
der Hilfsantrieb (10) ein an dem Fahrzeug (28) befestigbares Basiselement (44) aufweist, über welches der Hilfsantrieb (10) an dem Fahrzeug (28) befestigbar ist, wobei zumindest die Antriebsrolle (20) entlang einer mit der radialen Richtung (34) der Antriebsrolle (20) zusammenfallenden Bewegungsrichtung (46) relativ zu dem Basiselement (44) translatorisch bewegbar ist.

4. Hilfsantrieb (10) nach den Ansprüchen 2 und 3,
**dadurch gekennzeichnet, dass**
die Abstützrichtung (48) mit der Bewegungsrichtung (46) zusammenfällt, sodass die Antriebsrolle (20) in die Abstützrichtung (48) relativ zu dem Basiselement (44) translatorisch in Stützanlage mit dem Rad (26) bewegbar ist.

5. Hilfsantrieb (10) nach einem der vorhergehenden Ansprüche,
**dadurch gekennzeichnet, dass**
sich der Teil (T) in Umfangsrichtung der Antriebsrolle (20) über wenigstens 45 Grad, insbesondere über wenigstens 60 Grad und vorzugsweise über wenigstens 90 Grad, erstreckt.

6. Hilfsantrieb (10) nach einem der vorhergehenden Ansprüche,
**dadurch gekennzeichnet, dass**
das Getriebe (16) wenigstens ein eine Innenverzahnung (58) aufweisendes Hohlrad (56) und wenigstens ein eine Außenverzahnung (54) aufweisendes Zahnrad (40f) umfasst, welches über die Außenverzahnung (54) und die Innenverzahnung (58) mit dem Hohlrad (56) kämmt.

7. Hilfsantrieb (10) nach Anspruch 6,
**dadurch gekennzeichnet, dass**
das Hohlrad (56) entlang seiner axialen Richtung zumindest teilweise, insbesondere zumindest überwiegend oder vollständig, in der Antriebsrolle (20) angeordnet ist und/oder dass das Hohlrad (56) drehfest mit der Antriebsrolle (20) verbunden ist und/oder dass das Hohlrad (56) koaxial zu der Antriebsrolle (20) angeordnet ist.

8. Hilfsantrieb (10) nach Anspruch 6 oder 7,
**dadurch gekennzeichnet, dass**
das Zahnrad (40f) entlang seiner axialen Richtung zumindest teilweise, insbesondere zumindest überwiegend oder vollständig, in der Antriebsrolle (20) angeordnet ist.

9. Hilfsantrieb (10) nach einem der vorhergehenden Ansprüche,
**dadurch gekennzeichnet, dass**
der Motor (12) in dem Gehäuse (18) aufgenommen ist und/oder eine Bremse aufweist.

10. Anhänger, insbesondere Wohnwagen, Bootsanhänger, Verkaufswagen, Transportanhänger, oder Autotransportanhänger, mit wenigstens einem Hilfsantrieb nach einem der vorhergehenden Ansprüche.

## Claims

1. An auxiliary drive (10) for a vehicle (28), in particular for a trailer, with a motor (12), with a transmission (16) drivable by the motor (12), with a housing (18), in which at least the transmission (16) is at least partially accommodated, and with at least one drive roller (20) drivable by the motor (12) via the transmission (16) and thereby rotatable in relation to the housing (18), which is movable into supporting abutment with at least one wheel (26) of the vehicle (28) in radial direction (34) of the drive roller (20), such that the wheel (26) is drivable by the motor (12) via the drive roller (20) and the transmission (16) by driving the drive roller (20),
**characterized in that**
the transmission (16) comprises a crank drive (74) with at least one crank (76) coupled to the drive roller (20) in articulated and eccentric manner, via which the drive roller (20) is drivable by the motor (12) and thereby rotatable in relation to the housing (18); and
at least a part (T) of an outer circumferential lateral surface (22) of the drive roller (20) forming the maximum outer diameter (Dₘₐₓ) of the drive roller (20) protrudes beyond the housing (18) by at least 10 millimeters in radial direction (34) of the drive roller (20).

2. The auxiliary drive (10) according to claim 1,
**characterized in that**
the drive roller (20) is translationally movable into supporting abutment with the wheel (26) in a support direction (48) coinciding with the radial direction (34) of the drive roller (20), wherein at least the part (T) of the outer circumferential lateral surface (22) protrudes beyond the housing (18) in the support direction (48).

3. The auxiliary drive (10) according to any one of the preceding claims, **characterized in that**
the auxiliary drive (10) comprises a base element (44) capable of being attached to the vehicle (28), via which the auxiliary drive (10) can be attached to the vehicle (28), wherein at least the drive roller (20) is translationally movable in relation to the base element (44) along a movement direction (46) coinciding with the radial direction (34) of the drive roller (20).

4. The auxiliary drive (10) according to claims 2 and 3,
**characterized in that**
the support direction (48) coincides with the movement direction (46) such that the drive roller (20) is translationally movable into supporting abutment with the wheel (26) in the support direction (48) in relation to the base element (44).

5. The auxiliary drive (10) according to any one of the preceding claims, **characterized in that**
the part (T) extends over at least 45 degrees, in particular over at least 60 degrees and preferably over at least 90 degrees, in circumferential direction of the drive roller (20).

6. The auxiliary drive (10) according to any one of the preceding claims, **characterized in that**
the transmission (16) includes at least one ring gear (56) comprising an internal toothing (58) and at least one gear wheel (40f) comprising an external toothing (54), which meshes with the ring gear (56) via the external toothing (54) and the internal toothing (58).

7. The auxiliary drive (10) according to claim 6,
**characterized in that**
the ring gear (56) is at least partially, in particular at least predominantly or completely, arranged in the drive roller (20) along its axial direction and/or that the ring gear (56) is non-rotatably connected to the drive roller (20) and/or that the ring gear (56) is arranged coaxially with the drive roller (20).

8. The auxiliary drive (10) according to claim 6 or 7,
**characterized in that**
the gear wheel (40f) is at least partially, in particular at least predominantly or completely, arranged in the drive roller (20) along its axial direction.

9. The auxiliary drive (10) according to any one of the preceding claims, **characterized in that**
the motor (12) is accommodated in the housing (18) and/or comprises a brake.

10. A trailer, in particular travel trailer, boat trailer, sales vehicle, transport trailer or car transport trailer, with at least one auxiliary drive according to any one of the preceding claims.

## Revendications

1. Entraînement auxiliaire (10) pour un véhicule (28), en particulier pour une remorque, comportant un moteur (12), un bloc d'engrenages (16) pouvant être entraîné par le moteur (12), un carter (18) dans lequel au moins le bloc d'engrenages (16) est reçu au moins en partie, et au moins un rouleau d'entraînement (20) pouvant être entraîné par le moteur (12) via le bloc d'engrenages (16) et pouvant ainsi tourner par rapport au carter (18), lequel rouleau d'entraînement peut être déplacé dans une direction radiale (34) du rouleau d'entraînement (20) pour venir en appui sur au moins une roue (26) du véhicule (28), de telle sorte que l'entraînement du rouleau d'entraînement (20) permet d'entraîner la roue (26) par le moteur (12) via le rouleau d'entraînement (20) et le bloc d'engrenages (16),
**caractérisé en ce que**
le bloc d'engrenages (16) comporte un entraînement par manivelle (74) avec au moins une manivelle (76) couplée au rouleau d'entraînement (20) de manière articulée et excentrée, par l'intermédiaire de laquelle le rouleau d'entraînement (20) peut être entraîné par le moteur (12) et peut ainsi tourner par rapport au carter (18) ; et
**en ce que** le carter (18) fait saillie d'au moins 10 millimètres dans la direction radiale (34) du rouleau d'entraînement (20) au niveau d'au moins une partie (T) d'une surface d'enveloppe (22) du rouleau d'entraînement (20) sur le côté de la circonférence extérieure formant le diamètre extérieur maximal (Dₘₐₓ) du rouleau d'entraînement (20).

2. Entraînement auxiliaire (10) selon la revendication 1,
**caractérisé en ce que**
le rouleau d'entraînement (20) peut être déplacé en translation pour venir en appui sur la roue (26) dans une direction d'appui (48) coïncidant avec la direction radiale (34) du rouleau d'entraînement (20), le carter (18) faisant saillie dans la direction d'appui (48) au moins au niveau de la partie (T) de la surface d'enveloppe (22) sur le côté de la circonférence extérieure.

3. Entraînement auxiliaire (10) selon l'une des revendications précédentes,
**caractérisé en ce que**
l'entraînement auxiliaire (10) comporte un élément de base (44) pouvant être fixé sur le véhicule (28), par l'intermédiaire duquel l'entraînement auxiliaire (10) peut être fixé sur le véhicule (28), au moins le rouleau d'entraînement (20) pouvant être déplacé en translation le long d'une direction de déplacement (46) par rapport à l'élément de base (44) coïncidant avec la direction radiale (34) du rouleau d'entraînement (20).

4. Entraînement auxiliaire (10) selon les revendications 2 et 3,
**caractérisé en ce que**
la direction d'appui (48) coïncide avec la direction de déplacement (46), de telle sorte que le rouleau d'entraînement (20) peut être déplacé en translation pour venir en appui sur la roue (26) dans la direction d'appui (48) par rapport à l'élément de base (44).

5. Entraînement auxiliaire (10) selon l'une des revendications précédentes,
**caractérisé en ce que**
la partie (T) dans la direction circonférentielle du rouleau d'entraînement (20) s'étend sur au moins 45 degrés, en particulier sur au moins 60 degrés et de préférence sur au moins 90 degrés.

6. Entraînement auxiliaire (10) selon l'une des revendications précédentes,
**caractérisé en ce que**
le bloc d'engrenages (16) comprend au moins une couronne (56) comportant une denture intérieure (58) et au moins une roue dentée (40f) comportant une denture extérieure (54), laquelle roue dentée s'engrène avec la couronne (56) par l'intermédiaire de la denture extérieure (54) et de la denture intérieure (58).

7. Entraînement auxiliaire (10) selon la revendication 6,
**caractérisé en ce que**
au moins une partie, en particulier au moins une majeure partie ou la totalité, de la couronne (56) est agencée, le long de sa direction axiale, dans le rouleau d'entraînement (20) et/ou **en ce que** la couronne (56) est reliée au rouleau d'entraînement (20) de manière solidaire en rotation et/ou **en ce que** la couronne (56) est agencée coaxialement au rouleau d'entraînement (20).

8. Entraînement auxiliaire (10) selon la revendication 6 ou 7,
**caractérisé en ce que**
au moins une partie, en particulier au moins une majeure partie ou la totalité, de la roue dentée (40f) est agencée, le long de sa direction axiale, dans le rouleau d'entraînement (20).

9. Entraînement auxiliaire (10) selon l'une des revendications précédentes,
**caractérisé en ce que**
le moteur (12) est reçu dans le carter (18) et/ou comporte un frein.

10. Remorque, en particulier caravane, remorque de bateau, camion-magasin, remorque de transport ou remorque-plateau, comportant au moins un entraînement auxiliaire selon l'une des revendications précédentes.
